# DEMANDE DE BREVET EUROPEEN

(11) **EP 1 229 446 A1**
(43) Date de publication de la demande: **07.08.2002**
(21) Numéro de dépôt: 02290271.2
(22) Date de dépôt: 05.02.2002
(51) Int. Cl.: G06F 9/50

(54) **Procédé de simulation de performances et de réalisation d'applications multiprocesseurs, et dispositifs permettant de mettre en oeuvre ledit procédé**

(30) Priorité: 05.02.2001 FR 0101807
(71) Demandeur: Thales, 75008 Paris (FR)
(72) Inventeur: Lenormand, Eric, Thales Intellectual Property, 94117 Arcueil cx (FR)
(74) Mandataire: Desperrier, Jean-Louis

(57) **Abrégé**

La présente invention concerne un procédé de simulation de performances, et procédé de réalisation d'applications multiprocesseurs, et des dispositifs permettant de mettre en oeuvre lesdits procédés.

Le procédé de réalisation d'une application multiprocesseur selon l'invention comprend les étapes suivantes :
(a) une étape (E1) de placement de l'application sur l'architecture cible, en utilisant une description (D1) fonctionnelle de ladite application d'une part, et la liste des ressources (A1) de l'architecture cible d'autre part, de manière à produire un graphe (D2) de tâches ;
(b) une étape (E2) de préparation d'une simulation pour produire un graphe (D3) de services, à partir d'un graphe (D2) de tâches d'une part, et d'une liste de mécanismes et leurs définition (A2) d'autre part ;
(c) une étape (E3) d'exécution de la simulation, pour déterminer les performances de l'application placée, à partir d'un modèle comportemental (A3) de l'architecture cible d'une part, et du graphe (D3) de services d'autre part.

L'invention s'applique notamment aux applications multiprocesseurs nécessitant une forte puissance de calcul, telles que les traitements de signaux systématiques (TSS) des radars, les traitements d'images, ou les compressions de données temps réel.

## Description

La présente invention concerne un procédé de simulation de performances, et procédé de réalisation d'applications multiprocesseurs, et des dispositifs permettant de mettre en oeuvre lesdits procédés. Elle s'applique notamment aux applications multiprocesseurs nécessitant une forte puissance de calcul, telles que les traitements de signaux systématiques (TSS) des radars, les traitements d'images, ou les compressions de données temps réel.

On appelle application multiprocesseur une application destinée à être exécutée sur une architecture multiprocesseur. Une architecture comprend des éléments matériels (dits « hardware » dans la littérature anglo-saxonne) et des éléments logiciels (dits « software » dans la littérature anglo-saxonne). Les éléments matériels comprennent par exemple des processeurs, des mémoires, des circuits spécialisés, et des bus de données. Les éléments logiciels comprennent par exemple un jeu d'instructions de base mises à la disposition du programmeur, dit API (de l'expression anglo-saxonne « Application Programming Interface »), des programmes de communication bas niveau, et un ordonnanceur. Les éléments matériels d'une architecture s'appellent aussi des ressources. Les éléments logiciels d'une architecture s'appellent aussi des services.

Le placement est une étape intervenant lors de la réalisation d'applications multiprocesseurs. Il consiste à transformer une application décrite de manière fonctionnelle en un ensemble de sous-applications destinées chacune à l'un des processeurs d'une architecture cible. Lors de l'étape de placement, on cherche à faire exécuter des calculs en parallèle par plusieurs processeurs de l'architecture cible. Une première manière d'exécuter des calculs en parallèle, appelée parallélisme de tâche, consiste à répartir des tâches différentes sur plusieurs processeurs ou groupes de processeurs. Les différentes tâches s'exécutent alors en même temps sur des processeurs ou groupes de processeurs différents. Une seconde manière d'exécuter des calculs en parallèle, appelée parallélisme de données, consiste à répartir une même tâche sur plusieurs processeurs, Selon ce second mode de fonctionnement, dit SIMD ou SPMD (« Single Instruction Multiple Data » ou « Single Program Multiple Data »), plusieurs processeurs exécutent alors en même temps et de façon synchronisée des calculs correspondant à une même tâche, mais sur des données différentes.

Le placement comprend généralement une étape appelée partitionnement, une étape appelée affectation et une étape appelée ordonnancement. Le partitionnement consiste, à partir d'une application décrite de manière fonctionnelle, à découper l'application en sous ensembles disjoints d'étapes de calculs élémentaires (parallélisme de tâches) appelées tâches d'une part, et / ou à partager des blocs de données homogènes en blocs de données élémentaires (parallélisme de données) d'autre part. L'affectation, connue sous le nom de « mapping » dans la littérature anglo-saxonne, consiste à allouer les tâches élémentaires et les blocs de données élémentaires aux éléments de l'architecture tels que des processeurs pour des tâches, et des mémoires pour des blocs de données. L'ordonnancement consiste à déterminer la chronologie d'exécution des tâches. L'architecture multiprocesseurs choisie est souvent appelée architecture cible. L'application peut être décrite de manière fonctionnelle par un logiciel de haut niveau ou par une représentation graphique ou DFG (de l'expression anglo-saxonne « Data Flow Graph »). Les tâches peuvent être décrites sous une forme manipulable par des outils de génération de code (compilateurs par exemple), ou sous forme de codes utilisables par des processeurs élémentaires.

Un bon placement permet d'assurer un bon rendement de l'architecture, c'est à dire tirer au mieux parti des possibilités (puissance de calcul, débits de communication) de ses ressources. Par conséquent, un tel placement permet d'économiser des composants matériels dans l'architecture. Une architecture cible peut passer par exemple de 20 cartes électroniques à 10 cartes électroniques, grâce à un meilleur placement d'une même application.

Or le travail de placement d'applications sur des architectures cibles est complexe, et par conséquent long et coûteux. Ce travail est d'autant plus long et coûteux que l'on recherche de hauts rendements d'exécution. De plus, un placement efficace n'offre en général aucune souplesse. Si on souhaite ajouter des fonctionnalités à une application donnée ou changer d'architecture cible (appelé « retrofit » dans la littérature anglo-saxonne), tout le travail de placement est à refaire.

D'autres étapes peuvent intervenir lors de la réalisation d'applications multiprocesseurs. On peut citer la simulation des performances qui est nécessaire pour apprécier le comportement en temps réel de l'application placée avant de l'exécuter sur l'architecture cible réelle. Cette simulation de performances dépend de l'architecture cible d'une part, et du placement d'autre part. A chaque changement d'architecture, ces autres étapes sont à recommencer, ce qui est long et coûteux.

On utilise parfois des architectures possédant des services évolués pour faciliter la réalisation d'applications multiprocesseurs. Ces services prennent à leur charge une partie des détails relatifs notamment à la cohésion entre processeurs, qui sans cela doivent être réglés par le programmeur. La contrepartie est que de telles architectures sont complexes et utilisent beaucoup plus de ressources que les architectures classiques. De plus le comportement temps réel de telles architectures est moins prévisible. Le rendement du placement, pouvant se mesurer par le nombre d'opérations de calcul réalisées par une ressource de l'architecture cible par rapport à sa capacité théorique, est plus difficile à maîtriser et souvent plus faible pour de telles architectures cibles.

Une telle solution ne convient pas pour les applications nécessitant une forte puissance de calcul, telles que les traitements de signaux systématiques (TSS) des radars, les traitements d'images, ou les compressions de données temps réel. Ces applications, du type traitement du signal systématique (TSS), nécessitent des architectures de plus en plus volumineuses pour pouvoir être exécutées en temps réel. Ces applications TSS nécessitent un certain degré d'optimisation.

Un but de l'invention est de pallier aux inconvénients précités et notamment de réduire le temps nécessaire à la réalisation d'applications multiprocesseurs tout en optimisant le placement desdites applications d'une part, et de permettre de changer facilement d'architecture cible d'autre part.

A cet effet l'invention concerne un procédé de réalisation d'une application multiprocesseur comprenant les étapes suivantes :
(a) une étape (E1) de placement de l'application sur l'architecture cible, en utilisant une description (D1) fonctionnelle de ladite application d'une part, et la liste des ressources (A1) de l'architecture cible d'autre part, de manière à produire un graphe (D2) de tâches ;
(b) une étape (E2) de préparation d'une simulation pour produire un graphe (D3) de services, à partir d'un graphe (D2) de tâches d'une part, et d'une liste de mécanismes et leurs définition (A2) d'autre part ;
(c) une étape (E3) d'exécution de la simulation, pour déterminer les performances de l'application placée, à partir d'un modèle comportemental (A3) de l'architecture cible d'une part, et du graphe (D3) de services d'autre part.

L'invention concerne aussi le procédé de simulation intervenant lors dans le procédé de réalisation d'application multiprocesseur, et les dispositifs permettant de mettre en oeuvre lesdits procédés.

L'invention a pour principaux avantages qu'elle permet de réaliser une simulation comportementale dans laquelle l'heure simulée est incrémentée de façon à coïncider exactement avec la fin d'exécution d'un service, et dont la précision peut être adaptée facilement à moindre coût en ne modifiant que les modèles comportementaux.

D'autres caractéristiques et avantages de l'invention apparaîtront à l'aide de la description qui suit faite en regard de dessins annexés qui représentent :
- la figure 1, un exemple de réalisation d'applications multiprocesseurs selon l'invention sous la forme d'un schéma synoptique ;
- la figure 2, un exemple de placement sous la forme d'un schéma synoptique ;
- la figure 3, un exemple d'atelier de placement permettant de mettre en oeuvre le procédé de réalisation d'application illustré figure 1;
- la figure 4, un exemple de modèle comportemental utilisé dans l'atelier de placement illustré figure 3 sous la forme d'un diagramme d'objets ;
- la figure 5, un exemple d'objets utilisés lors d'une simulation dans l'atelier de placement illustré figure 3, sous la forme d'un diagramme d'objets ;
- la figure 6, un exemple de diagramme de classes correspondant aux ressources de l'architecture cible ;
- la figure 7, un exemple de diagramme de classes correspondant à des mécanismes ;
- la figure 8, un exemple d'objets utilisés lors d'une étape de préparation de la simulation, sous la forme d'un diagramme d'objets ;
- les figures 9, 10, et 11, des exemples de classes correspondant à des tâches, des mécanismes et des services ;
- la figure 12, un exemple de simulation.

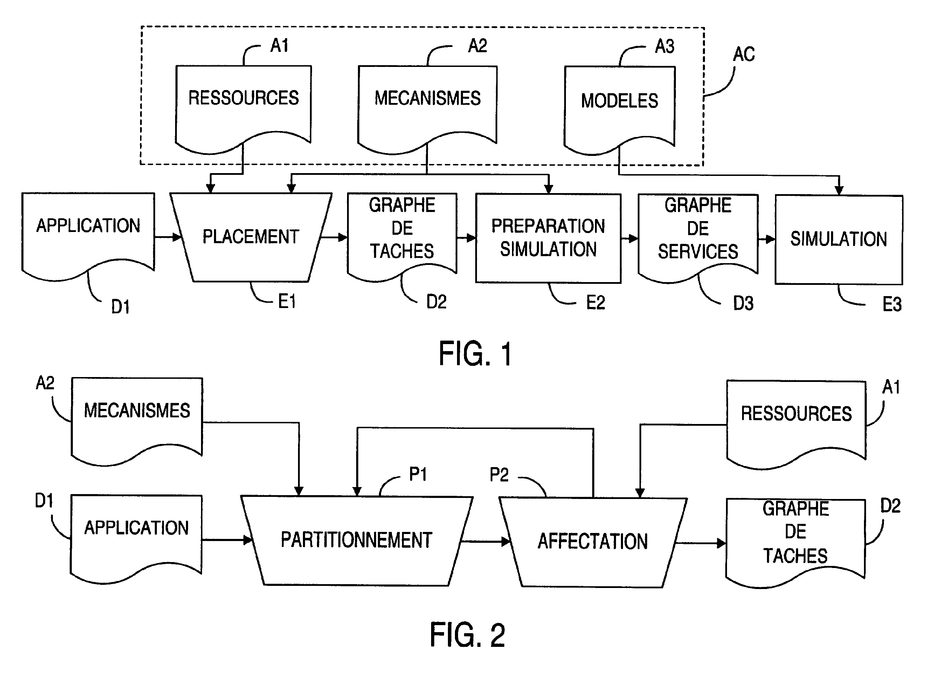

On se réfère maintenant à la figure 1 sur laquelle est représenté un exemple de réalisation d'applications multiprocesseurs selon l'invention sous la forme d'un schéma synoptique. On utilise généralement un atelier logiciel pour réalisation les applications multiprocesseurs. Un tel atelier peut comprendre un ou plusieurs programmes coopérant entre eux en échangeant des données à un format déterminé. L'utilisateur d'un tel atelier est appelé un mappeur. Cet atelier dépend de l'architecture cible sur laquelle l'application est destinée à être exécutée.

L'application non placée D1 est décrite de manière fonctionnelle, c'est à dire manière indépendante de l'architecture. Cette description D1 de l'application peut comprendre des tâches de calcul indépendantes de toute architecture. L'application peut être une application de TSS par exemple. Elle comprend des séquences de tâches, appelées nids de boucles, bien structurées et parallèles. Chaque nid de boucles contient un appel à une procédure ou macro-instruction correspondant en général à une transformation de tableau c'est à dire à une fonction d'une librairie de traitement du signal telle qu'une FFT. Les traitements sont réguliers et s'effectuent sur des signaux multidimensionnels, les données sont organisées en tableaux dont les dimensions (par exemple source, fréquence, temps récurrence, temps pointage) portent les vecteurs sur lesquels vont s'effectuer les traitements individuels. L'application est globalement représentée par un graphe de flot de données acyclique dans lequel chaque élément de tableau n'est mis qu'une seule fois à jour par l'application. Enfin, le déroulement de l'application ne découle pas d'événements extérieurs ni de résultats de calcul apparaissant lors de l'exécution, ce qui fait que ce déroulement est prévisible. En d'autres termes, le déroulement de l'application est déterministe.

Bien entendu, l'invention s'applique à tout type d'application de TSS, notamment aux applications déterministes par parties. Ces applications déterministes par parties comprennent des séquences de traitements déterministes de durée limitée, qui se succèdent dans le temps dans un ordre non prévisible a priori. C'est le cas des traitements radar multi-mode par exemple.

Lors d'une étape E1 de placement, les tâches de calcul sont réparties sur plusieurs groupes d'unités de calcul d'une architecture cible particulière. On se réfère à la figure 2 sur laquelle est représenté un exemple de placement sous la forme d'un schéma synoptique. Ce placement peut comprendre une étape de partitionnement P1 et une étape d'affectation P2.

Le partitionnement P1 peut se faire suivant les tâches ou suivant les données. Le partitionnement suivant les tâches (parallélisme de tâches) permet par exemple de diviser un calcul en plusieurs étapes élémentaires disjointes de calcul, représentées par des tâches ou des ensembles de tâches. Ces étapes élémentaires disjointes sont destinées à être exécutées par des sous-ensembles disjoints de l'architecture cible appelés segments. Le partitionnement suivant les données (parallélisme de données) permet par exemple de diviser les données utilisées par ces étapes élémentaires disjointes en plusieurs groupes de données, représentés par des parties de tableaux. Ces groupes de données sont destinés à être traités par des sous ensembles disjoints de l'architecture cible.

Lors de l'étape d'affectation P2, les étapes élémentaires disjointes de calcul peuvent être allouées par exemple à des segments d'architecture. Notamment, les tâches de calcul peuvent être allouées à des groupes d'unités de calcul. De plus, les groupes de données utilisées par ces étapes élémentaires disjointes peuvent être alloués à des parties des segments d'architecture. Notamment, les différentes parties d'un tableau de données peuvent être allouées à différentes unités de calcul d'un segment. L'affectation P2 permet de déterminer quelles ressources A1 de l'architecture cible sont impliquées lors de l'exécution d'une tâche.

Les tâches de calcul permettent de réaliser des opérations sur des données, telles que des filtrages numériques. L'application est destinée à être exécutée sur une architecture particulière. Cette architecture comprend des services permettant d'effectuer ces calculs. L'architecture comprend aussi des services permettant d'effectuer des mouvements de données. Un mouvement de données se décompose en plusieurs services. Par exemple un premier service permet de programmer un contrôleur DMA (abréviation de l'expression anglo-saxonne « Direct Memory Acces »), un second service permet d'effectuer la suite du mouvement de données. Ces services bien sûr varient d'une architecture à une autre. Ainsi une même application réalisant une même fonction s'écrit différemment selon l'architecture sur laquelle elle est destinée à être exécutée.

Selon l'invention, de manière à réduire le temps nécessaire à là réalisation des applications multiprocesseurs, on crée une interface de programmation plus haut niveau que les services. A cet effet, les services sont regroupés dans des mécanismes A2. Les mécanismes A2 dépendent de l'architecture cible. Ils correspondent aux fonctionnalités utilisées par les tâches. Un mécanisme est une opération répétée plusieurs fois par une tâche. Il existe des mécanismes de calcul et des mécanismes de mouvement de données. Les mécanismes de calcul représentent les fonctions susceptibles d'apparaître dans la description fonctionnelle D1 de l'application. Ces mécanismes peuvent correspondre à des fonctions de base d'une bibliothèque telles que le produit scalaire ou la transformation de Fourier discrète. Ces mécanismes peuvent aussi correspondre à des fonctions spécifiques d'une application particulière, tel qu'une fonction de compression ou de cryptage. Les mécanismes de mouvement de données permettent par exemple de déplacer les données d'un tableau, réparties dans un premier ensemble de mémoires de l'architecture cible, vers un second ensemble de mémoires de l'architecture cible.

Les étapes de partitionnement P1 et d'affectation P2 peuvent être réalisée de façon manuelle par le mappeur avec l'aide d'un outil de placement. Lors du patitionnement P1, une liste des mécanismes A2 de l'architecture peut être utilisée par l'outil de placement. Lors de l'affectation P2, une liste des ressources A1 de l'architecture peut être utilisée par l'outil de placement. A la fin du placement E1, on dispose d'un graphe de tâches D2, lesdites tâches étant affectées aux ressources de l'architecture cible.

On se réfère à nouveau à la figure 1 pour la suite de la description de l'exemple de réalisation d'application multiprocesseurs. Lors d'une seconde étape E2, le graphe de tâches est converti en un graphe de services D3. Cette étape E2 permet de préparer une simulation de l'exécution de l'application sur l'architecture cible.

Avantageusement, cette étape D2 de préparation de la simulation est réalisée de manière automatique par l'atelier. A cet effet, pour chaque tâche du graphe de tâches, le mécanisme associé à la tâche est converti en un ensemble de services. Pour effectuer cette conversion, l'atelier utilise la définition de chaque mécanisme, c'est à dire la liste des services correspondant à chaque mécanisme.

Le graphe de service D3 peut alors être utilisé lors d'une étape de simulation E3. Cette simulation permet de déterminer les performances de l'application placée. Si ces performances ne sont pas satisfaisantes, le mappeur peut modifier ce placement avec l'aide de l'outil de placement, et relancer une simulation.

Lors de la simulation, l'atelier utilise un modèle comportemental A3 de l'architecture cible. Ce modèle A3 permet de décrire le comportement de l'architecture face aux sollicitations des services, c'est à dire lors de l'exécution de l'application. Ce modèle A3 permet notamment de déterminer l'utilisation des ressources de l'architecture cible au cours de l'exécution des services. Par exemple un service de mouvement qui utilise un bus de données peut être ralenti si ce bus est déjà utilisé par un autre service. Le modèle A3 permet aussi de déterminer l'ordre d'exécution des services parmi la liste des services pouvant s'exécuter à un instant donné.

Les informations AC relatives à une architecture cible particulière, qui sont utilisées par l'atelier, comprennent :
- la liste des ressources A1,
- la liste de mécanismes et leurs définitions A2,
- et un modèle comportemental A3.

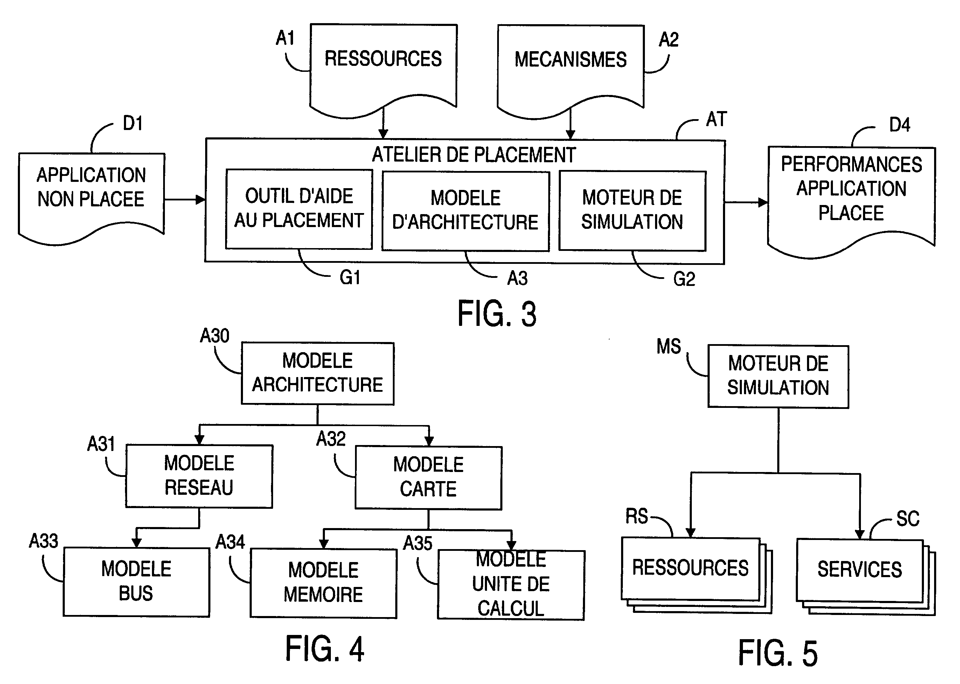

Ces informations AC sont mémorisées sous une forme qui permet d'adapter facilement l'atelier à de nouvelles architectures cibles. On se réfère maintenant à la figure 3 sur laquelle est représenté un exemple d'atelier de placement AT permettant de mettre en oeuvre le procédé de réalisation d'application illustré figure 1. Cet atelier comprend un outil d'aide au placement G1, un modèle d'architecture A3, et un moteur de simulation G2. L'outil d'aide au placement G1 permet de réaliser le placement de l'application, tel que celui illustré figure 2. Le modèle d'architecture A3 est utilisé lors de la simulation par le moteur de simulation G2 pour déterminer les performances D4 de l'application placée. La liste des ressources A1 et la liste de mécanismes et leurs définitions A2 peut être mémorisée dans un ou plusieurs fichiers de texte, interprétés par l'atelier de placement. A cet effet, des moyens de lecture de la liste des ressources A1 de l'architecture cible d'une part, et de la liste de mécanismes et leurs définitions A2 d'autre part peuvent être intégrés à l'atelier AT.

Une architecture cible peut comprendre des ressources telles que des unités de calcul, des mémoires, des bus de données. La liste des ressources A1 comprend une description de l'organisation des ces ressources. Ces ressources sont généralement organisées manière régulière de manière à permettre de paralléliser les calculs effectués par l'application. La liste de ressources A1est utilisée lors de l'étape de placement E1 d'une part, et lors de l'étape de simulation E3 d'autre part. Lors de l'étape de placement E1, la liste des unités de calcul et des mémoires est utilisée. Lors de l'étape de simulation E3, la liste complète des ressources est utilisée.

On appelle architecture segment chacun des sous-ensembles de l'architecture cible sur lequel s'effectuent des calculs mettant en oeuvre du parallélisme de données. On appelle architecture segment répétitive, une architecture segment dont les ressources sont agencées d'une manière régulière, de manière à pouvoir être regroupées dans des tableaux d'éléments identiques. Lorsque ces tableaux ont plusieurs dimensions, ces dimensions peuvent se représenter par des niveaux. Un niveau correspond souvent à une ressource de l'architecture, telle qu'une carte électronique, sur laquelle sont disposées d'autres ressources, telles que des mémoires par exemple. Chaque niveau comprend des éléments, tels que des ensembles homogènes d'une part, et / ou des ressources spécifiques d'autre part. Les ensembles homogènes d'un niveau peuvent comprendre à leur tour des éléments de niveau inférieur.

La liste des ressources A1 d'une architecture segment répétitive peut être décrite dans un fichier formaté en lignes et colonnes d'un tableau tel que :

| BLOC | Tiger | | |
|---|---|---|---|
| UC | UcTiger | 1 | 150 MHz |
| MEM | Ramlnt | 4000 Ko | 400 Ko/s |
| MEM | RamProg | 2000 Ko | 600 Mo/s |
| BUS | PortLien | 150 Mo/s | |
| BUS | PortBus | 1200 Mo/s | |
| AUTRE | Dma | 8 | |
| FIN | | | |
| BLOC | Carte | | |
| INC | Tiger | 6 | |
| MEM | RamExt | 1024 Ko | 600 Mo/s |
| MEM | DPRam | 500 Ko | 1000 Mo/s |
| BUS | BusExt | 600 Mo/s | |
| BUS | Liensin | 300 Mo/s | |
| BUS | Lienslnter | 150 Mo/s | |
| FIN | | | |
| SEGMENT | SegA | | |
| INC | Carte | 8 | |
| BUS | Reseau | 133 Mo/s | |
| FIN | | | |
| SEGMENT | SegB | | |
| INC | Carte | 4 | |
| BUS | Reseau | 133 Mo/s | |
| FIN | | | |

La première colonne de ce tableau comprend des mots clefs. Ces mots clef sont « BLOC », « UC », « MEM », « BUS », « AUTRE », « FIN », « INC », et « SEGMENT ».

Les mots clefs « UC », « MEM », « BUS », et « AUTRE » représentent des ressources de type unité de calcul, mémoire, bus ou autre. Ils sont suivis par le nom de la ressource, et des paramètres caractéristiques de cette ressource. Ainsi, à la cinquième ligne de ce tableau, il apparaît que l'architecture cible comprend des bus nommés « PortLien » caractérisés par un taux de transfert de 150 Mo/s.

Les mots clefs « BLOC » et « SEGMENT » représentent des groupes de ressources, dont le nom suit le mot clef. Chaque groupe se termine par le mot clef « FIN ». Toutes les ressources d'un groupe de ressources sont du même niveau dans l'architecture.

Un groupe de ressources peut être considéré comme une ressource d'un autre groupe de niveau supérieur. Lorsqu'un groupe de ressources est inclus dans un groupe de ressources de niveau supérieur, on utilise le mot clef « INC » suivi du nom du groupe et du nombre d'occurrences de ce groupe. Ainsi, à la dixième ligne de ce tableau il apparaît que le groupe « Carte » comprend six occurrences du groupe « Tiger ».

Bien entendu, il est possible de décrire la liste des ressources A1 différemment à l'aide d'un fichier binaire par exemple.

La liste des mécanismes et leurs définitions A2 peut être décrite dans un fichier formaté en lignes et colonnes d'un tableau tel que :

| CALC | Tiger | Mulac | |
|---|---|---|---|
| IN | Ramlnt | Complex32 | 8 |
| IN | Ramlnt | Complex32 | 8 |
| OUT | Ramlnt | Complex32 | 1 |
| CYCLES | 5 | 1 | 3 |
| FIN | | | |
| CALC | Tiger | FFT512 | |
| IN | Ramlnt | Complex32 | 512 |
| IN | Ramlnt | Complex32 | 512 |
| OUT | Ramlnt | Complex32 | 512 |
| CYCLES | 10 | 4608 | 12 |
| FIN | | | |
| MOUV | Carte | DPtol | |
| SOURCE | DPRam | | |
| DEST | Ramlnt | | |
| LOI | XA->XY | | |
| SERVICE | CoreService | S_DPtol | |
| FIN | | | |
| MOUV | Carte | Itol | |
| SOURCE | Ramlnt | | |
| DEST | Ramlnt | | |
| LOI | XYA->XAY | | |
| SERVICE | CoreService | S_Itol | |
| FIN | | | |
| MOUV | Carte | ltoE | |
| SOURCE | Ramlnt | | |
| DEST | RamExt | | |
| LOI | XY->XA | | |
| SERVICE | CoreService | S_ltoE | |
| FIN | | | |
| MOUV | Carte | Etol | |
| SOURCE | RamExt | | |
| DEST | Ramlnt | | |
| LOI | XA->XY | | |
| SERVICE | CoreService | S_Etol | |
| FIN | | | |
| MOUV | Carte | EtoE | |
| SOURCE | RamExt | | |
| DEST | RamExt | | |
| LOI | XA->AX | | |
| SERVICE | CoreService | S_EtoE | |
| FIN | | | |
| MOUV | SegA | AtoB | |
| SOURCE | RamExt | | |
| DEST | RamExt->SegB | | |
| LOI | XA->AX | | |
| SERVICE | CoreService | ProgDMAext | |
| SERVICE | NetworkService | S_AtoB | |
| FIN | | | |

La première colonne de ce tableau comprend des mots clefs. Ces mots clef sont « CALC », « MOUV », « FIN », « IN », « OUT », « CYCLES », « SOURCE », « DEST », « LOI », « SERVICE ».

Les mots clefs « CALC » et « MOUV » représentent respectivement des mécanismes de calcul et de mouvement de données. Ils sont suivis par le nom du groupe de ressources permettant de mettre en oeuvre le mécanisme, et par le nom du mécanisme. Ainsi, à la première ligne du tableau, il apparaît que le mécanisme de calcul « Mulac » est destiné à être mis en oeuvre par le groupe de ressources « Tiger ». La définition d'un mécanisme de calcul ou de mouvement s'arrête avec le mot clef « FIN ».

Les mots clefs « IN », « OUT » représentent respectivement les entrées et les sorties des mécanismes de calcul. Ils sont suivis par le nom de la mémoire dans laquelle sont mémorisées les données, la nature des données (entier, réel, complexe) utilisées, et le nombre de données. Ainsi, le mécanisme de cacul « Mulac » utilise en entrée deux tableaux de 8 nombres de type « Complex32 » mémorisés dans une mémoire « Ramlnt » et produit en sortie un nombre de type « Comple32 » mémorisé dans une mémoire « Ramlnt ».

Le mot clef « CYCLES » représente le nombre de cycles utilisés par un mécanisme de calcul. Il est suivi par le nombre de cycle de tête, de corps et de queue. En d'autres termes, le mot clef « CYCLES » est suivi par trois nombres entiers qui représentent le nombre de cycles nécessaire à l'initialisation du calcul, lors d'une itération, et à la fin du calcul.

Les mots clef « SOURCE » et « DEST » représentent respectivement les mémoires de départ et d'arrivée d'un mécanisme de mouvement. Ils sont suivis par le nom des mémoires de départ et d'arrivée. Ainsi le mécanisme de mouvement « Etol » permet de déplacer des données d'une mémoire « RamExt » vers une mémoire « Ramlnt ». Le mot clef « LOI » représente la manière dont les données changent de répartition d'une mémoire à une autre. Il est suivi par un nom correspondant à ce changement de répartition.

Le mot clef « SERVICE » représente l'un des services permettant de mettre en oeuvre un mécanisme de mouvement. Ce mot clef est suivi du type de service et du nom du service. Ainsi le mouvement de données « AtoB » se décompose en deux services: « ProgDMAext » de type « CoreService » d'une part, et « S_AtoB » de type « NetworkService » d'autre part.

Bien entendu, il est possible de décrire la liste des mécanismes et leurs définitions A2 différemment à l'aide d'un fichier binaire par exemple.

L'atelier de placement AT peut être réalisé en utilisant un langage de programmation objet tel que le C++. En d'autres termes, tous les modules de l'atelier AT peuvent être réalisés en utilisant le langage objet C++. Le modèle comportemental A3 fait alors partie intégrante de l'atelier. Il peut être compilé avec ce dernier ou être compilé séparément dans une librairie dynamique par exemple. Bien entendu, les différents modules de l'atelier peuvent être réalisés en utilisant des langages de programmation différents, en utilisant des techniques d'encapsulation par exemple.

On se réfère maintenant à la figure 4 sur laquelle est illustré un exemple de modèle comportemental A3 sous la forme d'un diagramme d'objets. Ce modèle comportemental A3 est utilisé lors de la simulation. Il permet notamment de déterminer si un service peut s'exécuter à un instant donné de la simulation, et si oui à quelle vitesse en fonction de l'utilisation des ressources de l'architecture cible à cet instant donné de la simulation. Le modèle comportemental A3 illustré figure 4 est un objet composite comprenant plusieurs objets A30, A31, A32, A33, A34, A35. Les objets A30, A31, A32, A33, A34, A35 comprennent des modèles comportementaux. Ces objets sont des instances de classes héritant des propriétés d'une classe commune. Cette classe commune permet de définir des méthodes génériques des modèles comportementaux. Ces méthodes génériques sont utilisées par le moteur de simulation. Lorsque l'architecture cible est modifiée, les modèles comportementaux doivent être adaptés à la nouvelle architecture cible. Grâce à cette structure de modèle utilisant des méthodes génériques, il n'est pas nécessaire de modifier les autres parties de l'atelier AT, notamment le moteur de simulation G2.

Avantageusement, objets A30, A31, A32, A33, A34, A35 sont organisés en niveaux de la même manière que les ressources de l'architecture cible. Ainsi les objets correspondant à un niveau comprennent des références à des objets correspondant à des niveaux inférieurs. Par exemple l'objet comprenant le modèle comportemental d'architecture A30 comprend une référence à un objet comprenant un modèle comportemental de carte A32 d'une part, et une référence à un objet comprenant un modèle comportemental de réseau A31 d'autre part. De même, l'objet comprenant un modèle comportemental de réseau A31 comprend une référence à l'objet comprenant un modèle comportemental de bus A33. L'objet comprenant un modèle comportemental de carte A32 comprend une référence à l'objet comprenant un modèle comportemental de mémoire A34 d'une part, et une référence à l'objet comprenant un modèle comportemental d'unité de calcul A35 d'autre part.

On se réfère maintenant à la figure 5 sur laquelle est illustré un exemple d'objets utilisés dans l'atelier de placement AT lors d'une simulation, sous la forme d'un diagramme d'objets.

La plupart des données nécessaires au moteur de simulation G2 peuvent être mémorisées dans un objet MS. Cet objet relatif au moteur de simulation MS permet notamment de mémoriser l'heure simulée, l'état d'occupation des ressources (mémoires et unités de calcul), et la liste des tâches en cours d'exécution. A cet effet, cet objet MS du moteur de simulation peut comprendre des références à d'autres objets RS, SC représentant respectivement les ressources de l'architecture cible d'une part, et ses services d'autre part.

Les objets RS représentant les ressources de l'architecture cible comprennent des attributs dans lesquels sont mémorisés les paramètres caractéristiques des ressources. Ces paramètres, tel que le taux de transfert d'un bus, peuvent être lus par l'atelier de placement AT dans un fichier comprenant la liste des ressources A1. Ce fichier comprenant la liste des ressources A1 peut être celui cité précédemment. A la lecture de ce fichier, des objets ressource RS peuvent être crées pour chaque ressource de l'architecture cible. Selon un premier mode de réalisation avantageux, un objet ressource RS peut correspondre à un groupe de ressources identiques de l'architecture cible. Un seul objet ressource RS peut être crée pour représenter un tableau de ressources. Cet objet RS comprend un attribut pour mémoriser le nombre de ressources présentes dans l'architecture cible. Pour une architecture segment répétitive par exemple, cet attribut peut être un tableau d'entiers. Le produit des entiers de ce tableau correspond au nombre de ces ressources présentes dans l'architecture cible. Les dimensions de ce tableau correspondent aux niveaux de l'architecture cible.

Selon une variante avantageuse, un objet ressource RS peut correspondre à un groupe de ressources. Il comprend alors une référence à d'autres objets ressources RS représentant des groupes de ressources ou des ressources à leur tour. Ces groupes de ressources sont représentés par les mots clefs « BLOC » et « SEGMENT » dans l'exemple de fichier cité précédemment.

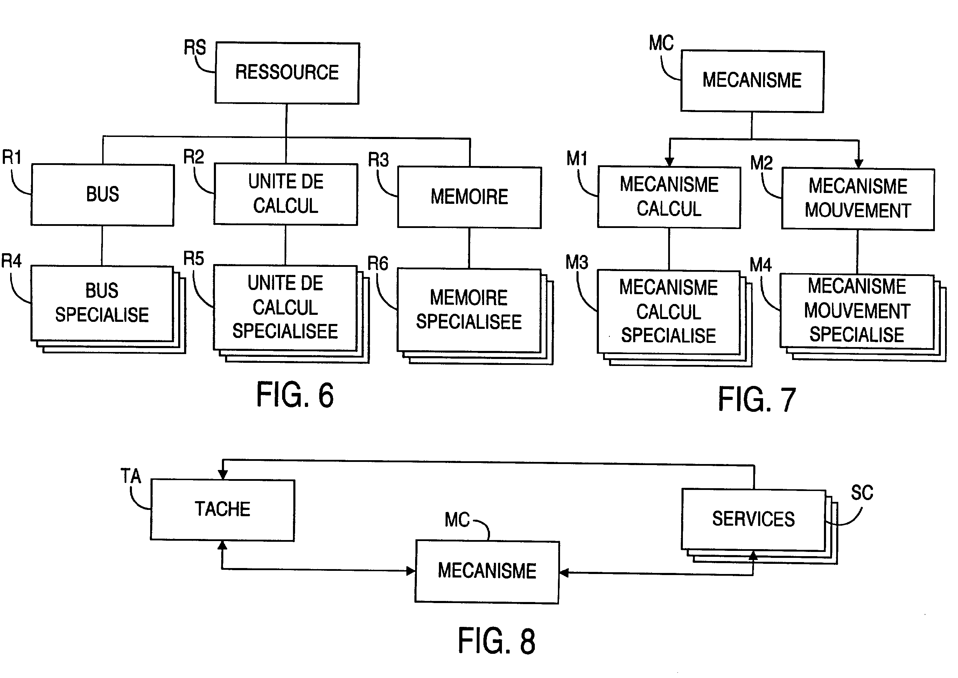

On se réfère maintenant à la figure 6 sur laquelle est illustré un exemple de diagramme de classes correspondant aux ressources de l'architecture cible. Un objet ressource RS est une instance d'une classe d'objet ressource. On utilise la même référence RS pour désigner l'objet et la classe. Selon un mode de réalisation avantageux, des classes d'objets spécialisées R1, R2, R3 peuvent correspondre respectivement à des bus, des unités de calcul, et des mémoires. Ces classes d'objets R1, R2, R3 héritent des propriétés de la classe d'objet ressource RS. Si le mot clef « BUS » apparaît de fichier comprenant la liste des ressources A1, l'outil de placement AT peut créer un objet en instanciant la classe R1. De même pour le mot clef « UC », l'outil de placement AT peut créer un objet en instanciant la classe R2. Pour le mot clef « BUS », l'outil de placement AT peut créer un objet en instanciant la classe R3. Pour le mot clef « AUTRE », l'outil de placement AT peut créer un objet en instanciant la classe RS.

Avantageusement, il est possible de définir d'autres classes d'objet ressource plus spécialisées R4, R5, R6 correspondant à des bus particuliers, des unités de calcul particulières, et des mémoires particulières par exemple. Ces classes R4, R5, R6 héritent alors de propriétés des classes R1, R2, R3 respectivement. D'autres mots clef pourront alors être utilisés dans le fichier de description A1 de l'architecture pour désigner ces ressources particulières. De cette manière, il est possible de changer d'architecture cible facilement, même lorsqu'il est nécessaire de définir des ressources spécialisées. Seuls les parties essentielles de l'atelier de placement AT sont modifiées. De nouveaux modèles comportementaux peuvent être ajoutés ou modifiés, de nouvelles classes de ressources R4, R5, R6 ajoutées ou modifiées, sans modifier le reste de l'atelier AT.

Les objets MC représentant les mécanismes de l'architecture cible comprennent des attributs dans lesquels sont mémorisés les paramètres caractéristiques des mécanismes. Certains paramètres, tel que le nombre et de type d'éléments utilisés en entrée par un mécanisme de calcul, peuvent être lus par l'atelier de placement AT dans un fichier comprenant la liste des mécanismes et leurs définitions A2. Ce fichier comprenant la liste des mécanismes et leurs définitions A2 peut être celui cité précédemment. Les objets mécanisme MC peuvent être crées après la lecture des paramètres présents dans ce fichier.

On se réfère maintenant à la figure 7 sur laquelle est illustré un exemple de diagramme de classes correspondant à des mécanismes. Un objet mécanisme MC est une instance d'une classe d'objet mécanisme. On utilise la même référence MC pour désigner l'objet et la classe. Selon un mode de réalisation avantageux, des classes d'objets spécialisées M1, M2 peuvent correspondre respectivement à des mécanismes de calcul et à des mécanismes de mouvement. Ces classes d'objets M1, M2 héritent des propriétés de la classe d'objet mécanisme MC. Si le mot clef « CALCUL» apparaît de fichier comprenant la liste des mécanismes et leurs définitions A2, l'outil de placement AT peut créer un objet en instanciant la classe M1. De même pour le mot clef « MOUVEMENT », l'outil de placement AT peut créer un objet en instanciant la classe M2.

Avantageusement, il est possible de définir d'autres classes d'objet mécanisme plus spécialisées M3, M4 correspondant à des calculs particuliers, et des mouvements particuliers par exemple. Ces classes M3, M4 héritent alors de propriétés des classes M1, M2 respectivement. D'autres mots clef pourront alors être utilisés dans le fichier de description A2 de l'architecture pour désigner ces mécanismes particuliers. De cette manière, il est possible de changer d'architecture cible facilement, même lorsqu'il est nécessaire de définir des services spécialisés. Seuls les parties essentielles de l'atelier de placement AT sont modifiées. De nouvelles classes de mécanismes M3, M4 peuvent être ajoutées ou modifiées, sans modifier le reste de l'atelier AT.

On se réfère maintenant à la figure 8 sur laquelle est illustré un exemple d'objets utilisés lors de l'étape E2 de préparation de la simulation, sous la forme d'un diagramme d'objets.

A partir de la description de l'application non placée D1, l'atelier de placement AT peut générer un graphe de tâches non placées. Ces tâches peuvent être représentées par des objets TA comprenant des attributs relatifs à ces tâches. L'un des attributs des objets TA peut être une référence à l'objet mécanisme MC correspondant au mécanisme utilisé par la tâche. De même, l'un des attributs de l'objet mécanisme MC peut être une référence à l'objet tâche TA. Lors de l'étape de préparation de la simulation, l'objet mécanisme MC peut générer des objets services SC. L'objet mécanisme MC peut comprendre parmi ses attributs des références aux objets services SC créés. De même les objets services SC peuvent comprendre parmi leurs attributs une référence à l'objet mécanisme MC les ayant crées. De plus les objets services SC peuvent comprendre parmi leurs attributs une référence à l'objet tâche TA. De cette manière, à partir du graphe de tâche D2 représenté par des objets tâches TA, on obtient un graphe de services D3 représenté par des objets services D3.

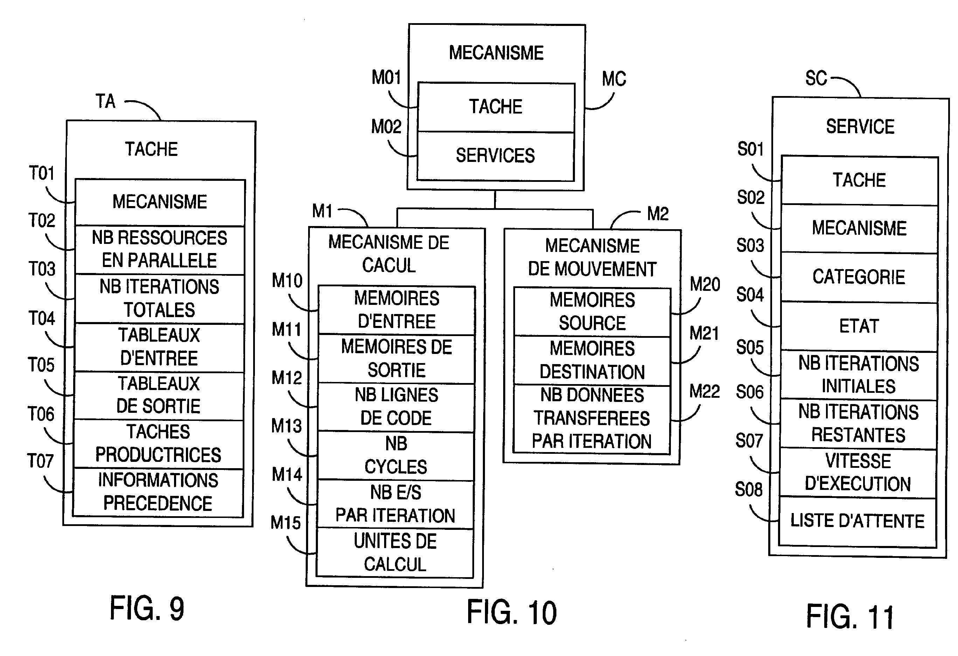

On se réfère maintenant aux figures 9, 10, et 11 sur lesquelles sont illustrés des exemples de classes TA, MC, SC, correspondant à des tâches, des mécanismes et des services.

La classe d'objet tâche TA illustrée figure 9 comprend des attributs T01, T02, T03, T04, T05, T06, T07. L'attribut T01 est une référence à un objet mécanisme. L'attribut T02 est un entier ou un tableau d'entiers utilisé lors de d'étape de placement E1. Ces entiers correspondent à un nombre de ressources de l'architecture cible utilisées en parallèle. Par exemple, si une tâche de calcul est effectuée en parallèle sur 10 cartes comprenant chacune 5 unités de calcul, ces nombres seront 10 et 5. L'attribut T03 correspond à un nombre d'itérations effectuées de façon séquentielle (pas en parallèle) par la tâche. Une tâche peut comprendre plusieurs boucles imbriquées, par exemple une première boucle de 8 itérations, dans laquelle est imbriquée une autre boucle de 32 itérations. Dans ce cas l'attribut T03 comprendra les nombres 8 et 32. Le nombre d'itérations totales effectuées par la tâche est le produit de ces nombres, c'est à dire 8 fois 32. Le nombre total de calculs élémentaires effectués de manière séquentielle ou en parallèle est le produit des premiers nombres mémorisés dans l'attribut T02 et des seconds nombres mémorisés dans l'attribut T03.

Les attributs T04 et T05 sont des références à des objets représentant les tableaux utilisés par la tâche respectivement en entrée et en sortie. Par exemple une tâche de calcul utilise deux tableaux d'entrées et un tableau de sortie. Le premier tableau d'entée contient des données mesurées, et le second les coefficients d'un filtre numérique. Le tableau de sortie est la somme de plusieurs données du premier tableau, pondérée par les coefficients du second tableau. L'attribut T04 comprend alors une référence aux objets représentant les deux tableaux d'entrée. L'attribut T05 comprend alors une référence aux objets représentant le tableau de sortie.

L'attribut T06 est une référence à des objets tâche. Les tâches correspondant aux objets référencés par l'attribut T06 sont celles permettant de produire les tableaux d'entrée. Les tâches référencées par l'attribut T06 sont appelées des tâches productrices, la tâche les référençant est appelée une tâche consommatrice. Les tableaux de sortie des tâches productrices sont utilisés comme tableau d'entrée par la tâche consommatrice. Une tâche peut être une tâche productrice vis à vis d'une première tâche, et consommatrice vis à vis d'une autre tâche. L'attribut T06 permet de construire un graphe de tâches, mettant en évidence les relations de production et de consommation de données (tâches productrices / tâches consommatrices). Il permet en outre de déterminer des premières relations de précédences entre les tâches. En effet, une tâche consommatrice ne peut pas s'exécuter avant l'appel d'une tâche productrice.

L'objet tâche TA peut comprendre en outre d'autres informations de précédences mémorisées dans l'attribut T07. Ces informations peuvent être des références à d'autres objets tâches. Elles peuvent être données par le mappeur par exemple lors de l'étape E1 de placement.

La classe d'objet mécanisme MC illustrée figure 10 comprend des attributs M01, M02. L'attribut M01 est une référence à un objet tâche. L'attribut M02 comprend des références à des objets services.

Les classes d'objets spécialisées M1, M2, correspondant respectivement à des mécanismes de calcul et à des mécanismes de mouvement, comprennent des attributs qui leurs sont propres. La classe d'objet mécanisme de calcul M1 comprend des attributs M10, M11, M12, M13, M14, M15. La classe d'objet mécanisme de mouvement M2 comprend des attributs M20, M21, M22.

Les attributs M10, M11 permettent de déterminer quelles mémoires de l'architecture cibles sont utilisées respectivement pour mémoriser les tableaux d'entrée et les tableaux de sortie de la tâche de calcul. Ces attributs peuvent être renseignés par le mappeur lors de l'étape d'affectation P2.

Les attributs M12, M13, M14 permettent de déterminer les performances de l'application placée lors d'une simulation. L'attribut M12 peut correspondre au nombre de lignes de codes nécessaires à l'exécution du mécanisme sur l'architecture cible. L'utilisation de cet attribut lors de l'étape de simulation E3 permet de déterminer quelle place mémoire est nécessaire pour exécuter le mécanisme. L'attribut M13 peut correspondre au nombre de cycles nécessaires à l'initialisation du calcul, lors d'une itération, et à la fin du calcul. L'attribut M14 peut correspondre au nombre d'entrées /sorties nécessaires lors d'une itération. Les attributs M12, M13 et M14 peuvent être renseignés à partir de la lecture d'un fichier contenant la liste des mécanismes et leurs définitions A2. Par exemple l'attribut M13 peut comprendre les données suivant le mot clef « CYCLES » et l'attribut M14 les données suivant les mots clef « IN » et « OUT ».

L'attribut M15 permet de déterminer quelles unités de calcul sont utilisées pour exécuter le mécanisme. Cet attribut peut être renseigné par le mappeur lors de l'étape d'affectation P2.

Les attributs M20 et M21 permettent de déterminer les mémoires départ et d'arrivée du mécanisme de mouvement. Ces attributs peuvent être renseignés à partir de la lecture d'un fichier contenant la liste des mécanismes et leurs définitions A2. Par exemple l'attribut M20 peut comprendre les données suivant le mot clef « SOURCE », et l'attribut M21 les données suivant le mot clef « DEST ».

L'attribut M22 permet de déterminer le nombre de données transférées par itération. Chaque itération permet de déplacer plusieurs données des mémoires de départ vers les mémoires d'arrivée. Cet attribut permet de déterminer leur nombre. Il peut être utilisé lors de l'étape de simulation pour déterminer la vitesse d'exécution du mouvement de données.

La classe d'objet service SC illustrée figure 11 comprend des attributs S01, S02, S03, S04, S05, S06, S07, S08.

L'attribut S01 est une référence à un objet tâche. L'attribut S02 est une référence à un objet mécanisme. L'attribut S03 permet de déterminer la catégorie du service. Selon sa catégorie, un service peut par exemple réserver des ressources, libérer des ressources, ou ni réserver ni libérer de ressource. Cet attribut peut être renseigné lors de la création de l'objet service par un objet mécanisme. L'objet mécanisme comprend par exemple une méthode permettant de créer des objets services. Lors de l'exécution de cette méthode, certains attributs des objets services, tel que l'attribut S03, sont initialisés.

L'attribut S04 permet de déterminer l'état d'un service au cours d'une simulation E3. Un service peut par exemple être en attente (état service en attente), en cours d'exécution (état service en cours), ou son exécution terminée (état service fini). Cet attribut S04 est mis à jour en cours de simulation.

Les attributs S05 et S06 permettent de déterminer l'avancement d'exécution du service. L'attribut S05 correspond au nombre d'itérations totales à exécuter. En d'autres termes l'attribut S05 correspond au nombre d'itérations initiales du service. L'attribut S06, mis à jour en cours de simulation, correspond au nombre d'itérations restantes du service. Avant le lancement du service, le nombre d'itérations initiales est égal au nombre d'itérations restantes. A la fin de son exécution, le nombre d'itérations restantes est nul.

L'attribut S07 correspond à la vitesse d'exécution du service. Cette vitesse peut être exprimée en nombre de cycles par itérations. Elle dépend notamment de l'utilisation des ressources de l'architecture cible. Elle est mise à jour en cours de simulation en utilisant le modèle A3 d'architecture.

L'attribut S08 comprend des références à des objets services. Ces objets services correspondent à la liste des services à attendre avant d'exécuter le service. Cet attribut S08 peut être renseigné lors de la création de l'objet service, en utilisant notamment les attributs T06 et T07 de l'objet tâche dont résulte l'objet service.

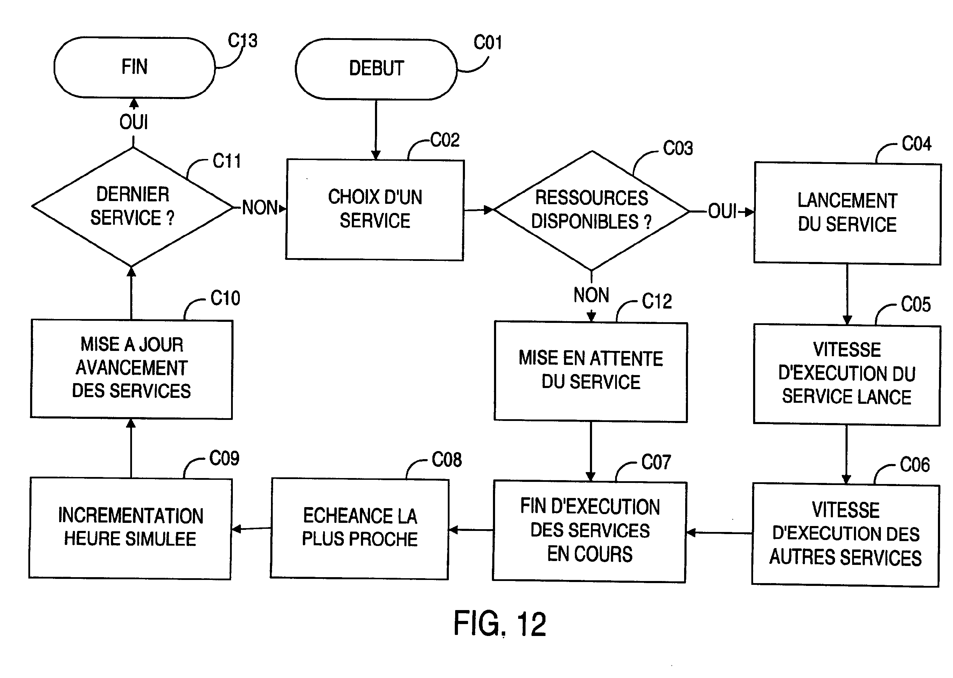

On se réfère maintenant à la figure 12 sur laquelle est illustré un exemple de simulation E3.

Au début C01 de la simulation E3, le moteur de simulation G2 fait le choix C02 d'un service à lancer parmi les services dont la liste d'attente est vide (attribut S08 des objets services). Puis un test C03 est effectué pour déterminer si le service dispose des ressources nécessaires pour son exécution. Si c'est le cas, le moteur de simulation lance le service lors d'une étape C04 en mettant à jour l'attribut S04 de l'objet service.

En utilisant le modèle d'architecture A3, la vitesse d'exécution du service lancé est alors renseignée lors d'une étape C05 en mettant à jour l'attribut S07 de l'objet service correspondant. Après le lancement C05 du service, l'utilisation des ressources de l'architecture est différente. De la même manière, la vitesse d'exécution des autres services lancés est alors mise à jour lors d'une étape C06.

Puis lors d'une étape C07, on utilise les attributs S06 et S07 des objets services lancés pour déterminer les heures de fin d'exécution des services en cours. Les attributs S06 et S07 correspondent au nombre d'itérations restantes et à la vitesse d'exécution des services lancés.

Puis lors d'une étape C08, en comparant les heures déterminées à l'étape C07, on détermine l'échéance la plus proche, c'est à dire celle arrivant en premier dans la simulation. En d'autres termes, on détermine lors des étapes C07 et C08 quel service aura fini de s'exécuter le premier.

Puis lors d'une étape C09, l'heure simulée est incrémentée de manière à être égale à l'échéance la plus proche déterminée à l'étape C08. Cette heure simulée peut être mémorisée dans un attribut du moteur de simulation par exemple. Les attributs S06 et S04 des services en cours d'exécution sont alors mis à jour lors d'une étape C10.

Puis lors d'un test C11, on détermine si le dernier service en cours d'exécution est maintenant fini (attribut S04). Si tel est le cas la simulation, c'est la fin C13 de la simulation. Sinon, la simulation continue à l'étape C02.

Lors du test C03, si le service sélectionné ne peut pas être lancé, celui-ci est mis en attente lors d'une étape C12, et la simulation continue à l'étape C07.

Tout au long de cette simulation, des paramètres tel que l'état d'occupation des ressources, ou les tâches en cours d'exécution (c'est à dire celles dont les services sont en cours d'exécution), sont enregistrés par le moteur de simulation avec l'heure simulée. Ces paramètres sont des indicateurs des performances D4 de l'application placée.

Bien entendu, l'invention ne se limite pas aux exemples décrit ci-avant. L'atelier peut être programmé en utilisant un autre langage, la structure des objets décrits peut être différentes, certains objets peuvent être remplacés par des groupes d'objets, et plusieurs objets peuvent être regroupés en un seul objet.

## Revendications

1. Procédé de simulation d'une application multiprocesseur placée sur une architecture cible, **caractérisé en ce qu'**il comprend au moins les étapes suivantes :
(a) une étape (E2) de préparation de la simulation, pour produire un graphe (D3) de services, à partir d'un graphe (D2) de tâches d'une part, et d'une liste de mécanismes et leurs définition (A2) d'autre part ;
(b) une étape (E3) d'exécution de la simulation, pour déterminer les performances de l'application placée, à partir d'un modèle comportemental (A3) de l'architecture cible d'une part, et du graphe (D3) de services d'autre part.

2. Procédé réalisation d'une application multiprocesseur, **caractérisé en ce qu'**il comprend au moins les étapes suivantes :
(a) une étape (E1) de placement de l'application sur l'architecture cible, en utilisant une description (D1) fonctionnelle de ladite application d'une part, et la liste des ressources (A1) de l'architecture cible d'autre part, de manière à produire un graphe (D2) de tâches ;
(b) une étape (E2) de préparation d'une simulation pour produire un graphe (D3) de services, à partir d'un graphe (D2) de tâches d'une part, et d'une liste de mécanismes et leurs définition (A2) d'autre part ;
(c) une étape (E3) d'exécution de la simulation, pour déterminer les performances de l'application placée, à partir d'un modèle comportemental (A3) de l'architecture cible d'une part, et du graphe (D3) de services d'autre part.

3. Procédé selon la revendication 2, **caractérisé en ce que** l'étape de placement (E1) comprend une étape de partitionnement (P1) et une étape d'affectation (P2).

4. Procédé selon l'une des revendications précédentes, **caractérisé en ce que** l'étape (E2) de préparation de la simulation comprend une étape de création d'objets représentant les services, ces objets étant crées par des objets représentant les mécanismes.

5. Procédé selon l'une des revendications précédentes, **caractérisé en ce que** lors de l'étape (E3) d'exécution de la simulation, des objets représentant les services de l'architecture cible sont utilisés, des attributs de ces objets étant mis à jour en cours de simulation en fonction de l'utilisation des ressources à l'heure simulée.

6. Dispositif permettant de réaliser une application multiprocesseur, **caractérisé en ce qu'**il comprend :
(a) un outil d'aide au placement (G1) permettant à un mappeur de placer une application décrite de manière fonctionnelle sur une architecture cible ;
(b) un modèle d'architecture (A3) comprenant des modèles comportementaux d'éléments de l'architecture ;
(c) un moteur de simulation (G2), utilisant le modèle d'architecture, pour déterminer les performances de l'application placée.

7. Dispositif selon la revendication 6, **caractérisé en ce que** le modèle d'architecture (A3) comprend une interface générique, indépendante de l'architecture cible, de manière à pouvoir être modifié lorsque l'architecture cible est modifiée, et ce sans modifier l'outil d'aide au placement (G1) et sans modifier le moteur de simulation (G2).

8. Dispositif selon la revendication 6, caractérisé qu'il comprend des moyens de lecture de la liste des ressources (A1 ) de l'architecture cible d'une part, et de la liste de mécanismes et leurs définitions (A2) d'autre part.
